# EUROPEAN PATENT APPLICATION

(11) **EP 4 712 552 A1**
(43) Date of publication of application: **18.03.2026**
(21) Application number: 24803349.0
(22) Date of filing: 19.04.2024
(51) Int. Cl.: H04W 28/18, H04W 4/40, H04W 28/06, H04W 84/00

(54) **COMMUNICATION DEVICE, CONTROL METHOD, AND PROGRAM**

(30) Priority: 10.05.2023 JP 2023078137
(71) Applicant: Canon Kabushiki Kaisha, Tokyo, 146-8501 (JP)
(72) Inventor: ONDA, Taiga, Tokyo 146-8501 (JP)
(74) Representative: Canon Europe Limited
(86) International application number: PCT/JP2024/015509
(87) International publication number: WO 2024/232235

(57) **Abstract**

A communication apparatus includes acquisition means configured to acquire a message containing a V2XP Info Field indicating a V2X communication policy, the message containing first information indicating a correspondence between a communication area and a value of a radio parameter, and control means configured to provide a function as a mobile IAB node based on the first information.

## Description

### Technical Field

The present disclosure relates to a communication apparatus, a control method, and a program.

### Background Art

The standardization of IAB is proceeding as a communication technology for backhaul in 3rd Generation Partnership Project (3GPP) (registered trademark). IAB is an abbreviation for Integrated Access and Backhaul.

The IAB technology is a technology that uses millimeter-wave wireless communication in the 28 GHz band or the like, used for access communication between a base station and a user equipment (UE), simultaneously as backhaul communication (PTL 1).

In backhaul communication using the IAB technology, a relay called an IAB node relays communication from an IAB donor that is a base station through millimeter-wave communication. Area coverage can be expanded at a lower cost using the IAB technology compared to existing wired communication using an optical fiber or the like.

Heretofore, 3GPP has developed specifications for fixed base stations (IAB nodes that do not move) up to Rel-17.

Currently, 3GPP plans to actively discuss a vehicle mounted relay that is a use case in the upcoming Rel-18 and mobile IAB as the development of specifications for implementing the use case.

Here, it is conceivable that various requirements that cannot be satisfied by only the specifications for fixed base stations, discussed so far, arise.

Among them, there is a discussion item "Authorization and Settings of Mobile Base Station Relay". Here, it is assumed that a mobile IAB node temporarily mounted on a vehicle functions as a relay to provide service to UEs in order to enable special coverage and connectivity during a large-scale event or the like in an urban environment or a designated area.

As a use case, 3GPP TR22.839 reports that a mobile IAB node provides service to surrounding UEs when the mobile IAB node is present within a specific area and the mobile IAB node interrupts the provision of service when the mobile IAB node has moved outside the specific area.

In this regard, a technology for providing application functions and services by using the position information and movement information of mobile nodes is known (PTL 2).

### Citation List

### Patent Literature

PTL 1: PCT Japanese Translation Patent Publication No. 2019-534625
PTL 2: PCT Japanese Translation Patent Publication No. 2009-501453

### Summary of Invention

### Technical Problem

Incidentally, when it is determined whether to interrupt the provision of service based on whether the mobile IAB node has moved outside a specific area, it is useful to determine, on the 5G system, how the mobile IAB node defines the specific area.

The present invention is made to address at least one of the above challenges. One aspect of the present invention is to provide a mechanism that allows a mobile IAB node to grasp each specific area.

### Solution to Problem

One aspect of the present invention is a communication apparatus. The communication apparatus includes acquisition means configured to acquire a message containing a V2XP Info Field indicating a V2X communication policy, the message containing first information indicating a correspondence between a communication area and a value of a radio parameter, and control means configured to provide a function as a mobile IAB node based on the first information.

### Advantageous Effects of Invention

According to one aspect of the present invention, it is possible to provide a mechanism that allows a mobile IAB node to grasp each specific area.

### Brief Description of Drawings

[Fig. 1] Fig. 1 is a block diagram of the hardware configuration of an IAB node.
[Fig. 2] Fig. 2 is a software functional block diagram of the IAB node.
[Fig. 3A] Fig. 3A is a V2XP Info Field message format diagram in 3GPP specifications.
[Fig. 3B] Fig. 3B is a Not served by E-UTRA and not served by NR field format diagram in the 3GPP specifications.
[Fig. 3C] Fig. 3C is a Radio parameters per geographical area list field format diagram in the 3GPP specifications.
[Fig. 3D] Fig. 3D is a radio parameters per geographical area contents field format diagram in the 3GPP specifications.
[Fig. 3E] Fig. 3E shows a geographical area contents field format diagram and a Coordinate field format diagram in the 3GPP specifications.
[Fig. 3F] Fig. 3F is a Radio parameters contents field format diagram in the 3GPP specifications.
[Fig. 4] Fig. 4 is a sequence diagram for acquiring V2X communication policy information and determining specific areas in an embodiment.
[Fig. 5A] Fig. 5A is a diagram showing an example (Part 1) of movement of a mobile IAB node and operational radio parameters in the present embodiment.
[Fig. 5B] Fig. 5B is a diagram showing an example (Part 2) of movement of a mobile IAB node and operational radio parameters in the present embodiment.
[Fig. 6] Fig. 6 is a control flowchart for controlling the presence or absence of functions provided as a mobile IAB node based on radio parameters associated with area information in the present embodiment.
[Fig. 7] Fig. 7 is an illustration diagram of a second embodiment and is a schematic diagram showing a case where two neighboring specific areas are separated by definition.
[Fig. 8] Fig. 8 is a schematic flowchart of an example of a process that is executed in one mobile IAB node according to the present embodiment.
[Fig. 9A] Fig. 9A is a diagram showing another message format different from the first embodiment related to a V2XP Info Field message indicating a V2X communication policy in the 3GPP specifications.
[Fig. 9B] Fig. 9B is an illustration diagram of a PLMN infos field in the message format shown in Fig. 9A.
[Fig. 9C] Fig. 9C is an illustration diagram of V2X AS addresses.
[Fig. 9D] Fig. 9D is an illustration diagram of a Geographical area field.

### Description of Embodiments

Hereinafter, embodiments will be described in detail with reference to the attached drawings.

### [First Embodiment]

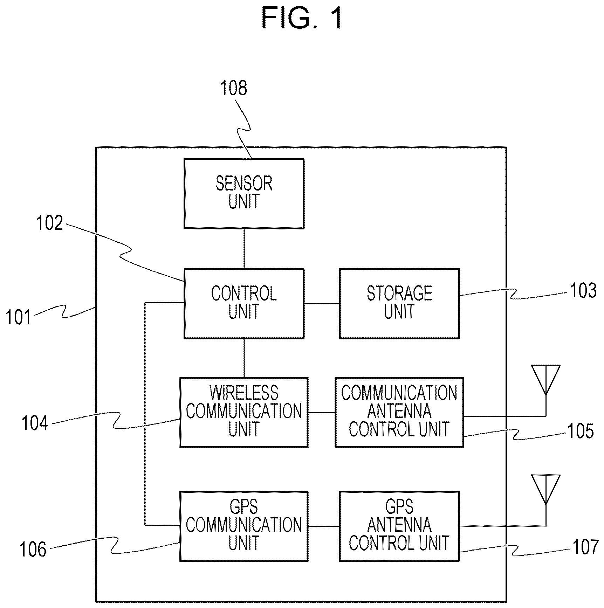

Fig. 1 is a block diagram that shows an example of the hardware configuration of an IAB node according to an embodiment.

The hardware configuration 101 related to the IAB node includes a control unit 102, a storage unit 103, a wireless communication unit 104, a communication antenna control unit 105, a GPS communication unit 106, a GPS antenna control unit 107, and a sensor unit 108.

The control unit 102 controls the entire apparatus by running a control program stored in the storage unit 103. The control unit 102 is made up of, for example, one or more processors, such as CPUs and MPUs, and controls the entire communication apparatus by running a control program read from a RAM that is the storage unit 103. The processes to be executed by the control unit 102, which will be described with reference to the flowchart (described later), can also be implemented using a hardware circuit, such as an ASIC and an FPGA. ASIC is an abbreviation for Application Specific Integrated Circuit. FPGA is an abbreviation for Field Programmable Gate Array. By cooperation of a hardware circuit with a processor, such as a CPU and an MPU, the processes that will be described in the flowchart (described later) can be implemented.

The storage unit 103 stores the control program that the control unit 102 runs, and various pieces of information, such as cell information, connection terminal information, IAB routing information, and position information. The storage unit 103 may include a main storage unit and an auxiliary storage unit. Examples of the main storage unit include a read only memory (ROM) and a random access memory (RAM). The main storage unit may store or temporarily save programs and data of an operating system (OS), which is basic software, and application software, executed by the control unit 102. Examples of the auxiliary storage unit include a hard disk drive (HDD) and a solid state drive (SSD) and may store data related to application software and the like. For example, control programs stored in a non-volatile storage area are deployed to the random access memory (RAM) and run by the processor that makes up the control unit 102. In this way, the control unit 102 and the storage unit 103 may function as a so-called computer.

The wireless communication unit 104 performs cellular network communication, such as LTE and 5G, in compliant with the 3GPP (registered trademark) specifications.

The communication antenna control unit 105 controls an antenna for wireless communication (not shown) performed by the wireless communication unit 104.

The GPS communication unit 106 receives satellite signals from global positioning system (GPS) satellites to acquire position information on a current position, including position identification information, such as longitude and latitude information. The GPS communication unit 106 may have a function to measure (position) a current position based on satellite signals.

The GPS antenna control unit 107 controls an antenna for GPS communication (not shown) that is performed by the GPS communication unit 106.

The sensor unit 108 collects surrounding environment information, such as moving speed and moving distance. The sensor unit 108 may have, for example, functions similar to those of a wheel speed sensor and an image sensor mounted on a vehicle.

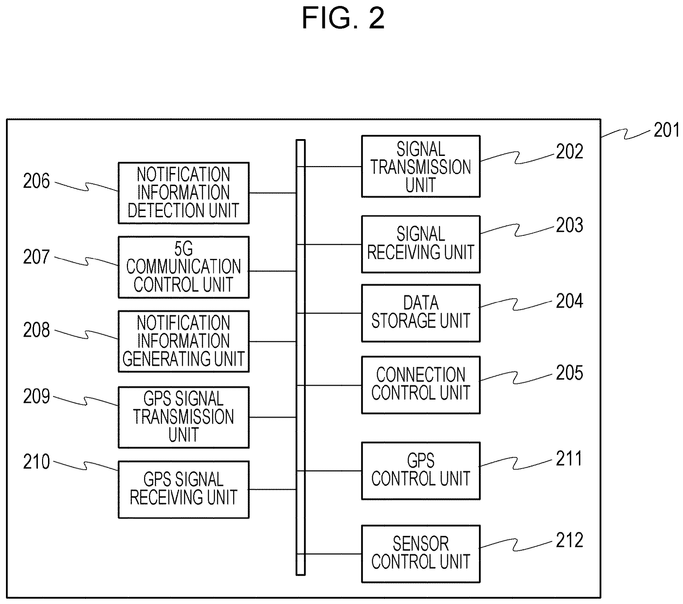

Fig. 2 is a block diagram that shows an example of the configuration of software functional blocks of the IAB node that executes a communication control function.

Software functions 201 related to the IAB node include a signal transmission unit 202, a signal receiving unit 203, a data storage unit 204, a connection control unit 205, a notification information detection unit 206, a 5G communication control unit 207, and a notification information generating unit 208. The software functions 201 include a GPS signal transmission unit 209, a GPS signal receiving unit 210, a GPS control unit 211, and a sensor control unit 212.

The signal transmission unit 202 and the signal receiving unit 203 perform cellular network communication, such as LTE and 5G, in compliant with the 3GPP specifications with a user equipment (UE).

The data storage unit 204 stores and holds software itself, IAB routing information, information about user equipments being connected, position information, and moving path information.

The connection control unit 205 controls an antenna for wireless communication performed by the wireless communication unit 104.

The notification information detection unit 206 detects notification information from surrounding IAB nodes. Notification information may be a synchronization signal/PBCH block (SSB).

The 5G communication control unit 207 performs connection to and disconnection from a 5G network.

The notification information generating unit 208 generates notification information to report the appearance (presence) of an own IAB node.

The GPS signal transmission unit 209 and the GPS signal receiving unit 210 perform communication compliant with the GPS standards with a terminal apparatus.

The GPS control unit 211 controls an antenna for GPS communication performed by the GPS communication unit 106.

The sensor control unit 212 performs control for collecting surrounding environment information, such as moving speed and moving distance, using various sensors related to the sensor unit 108.

Next, a method of defining specific areas of a mobile IAB node in the present embodiment will be described.

In the present embodiment, communication area information included in V2X communication policy parameters in 5G New Radio (NR) defined by 3GPP is determined as specific areas.

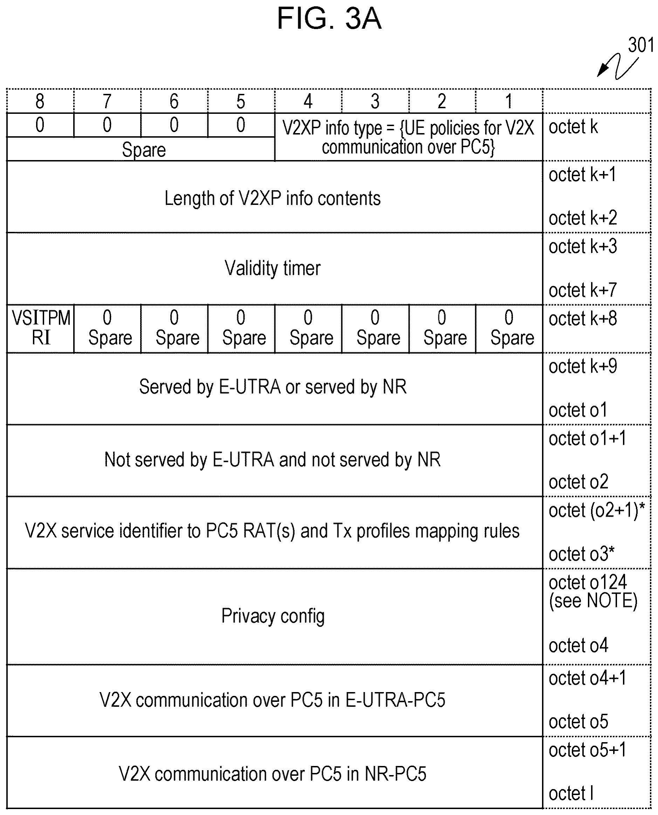

Figs. 3A to 3F show message formats related to a V2XP Info Field message indicating a V2X communication policy in the 3GPP specifications.

The message format is defined in TS24.588 and is intended to notify an IAB node of a V2X communication policy in 5G New Radio (NR) defined by 3GPP.

In a message format 301 shown in Fig. 3A, a V2XP info type field stores information indicating that it is a policy provided for mobile IAB. In the present embodiment, it is assumed that information indicating UE policies for V2X communication over PC5 (an example of second information) is stored.

As shown in Fig. 3A, the fields of the message format 301 store nested information such as update cycle information for parameters such as radio parameters, radio settings, and communication area information, which compose the V2X communication policy information.

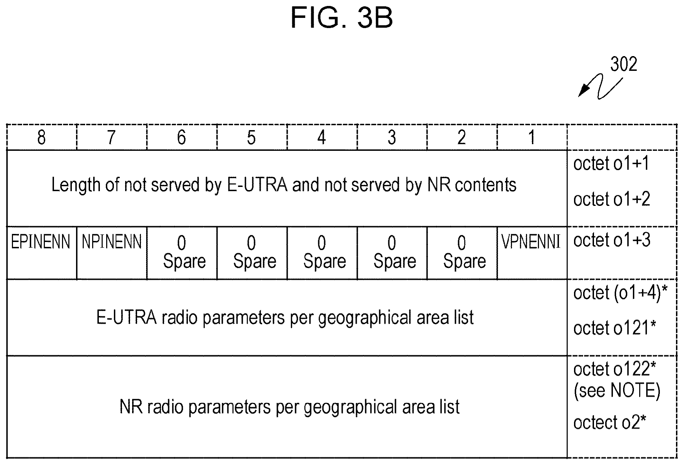

A message format 302 shown in Fig. 3B relates to a Not served by E-UTRA and not served by NR field in the V2XP Info Field message format.

An E-UTRA radio parameters per geographical area list in the message format 302 stores parameters associated with radio settings and communication area information. This also applies to an NR radio parameters per geographical area list field.

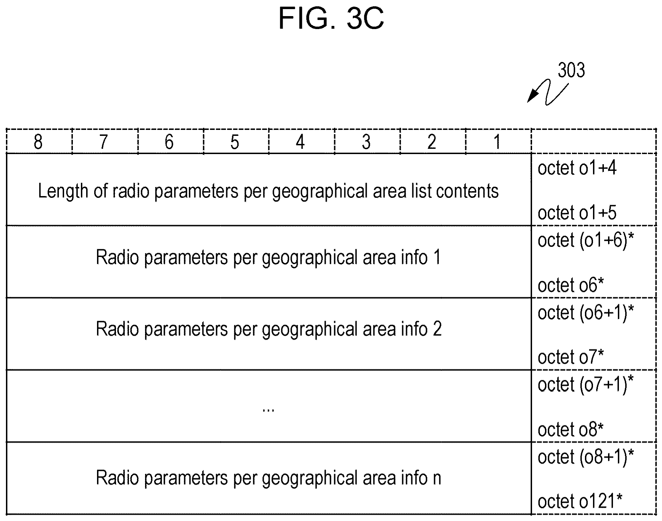

A message format 303 shown in Fig. 3C relates to a Radio parameters per geographical area list field. The fields related to the message format 303 are stored in the EUTRA radio parameters per geographical area list. Alternatively, the fields related to the message format 303 are stored in the NR radio parameters per geographical area list field.

The field related to the message format 303 is composed of multiple Radio parameters per geographical area info fields (an example of first information) associated with radio parameters and communication area information. In a communication area, it is expected to operate with the radio parameters associated with the communication area.

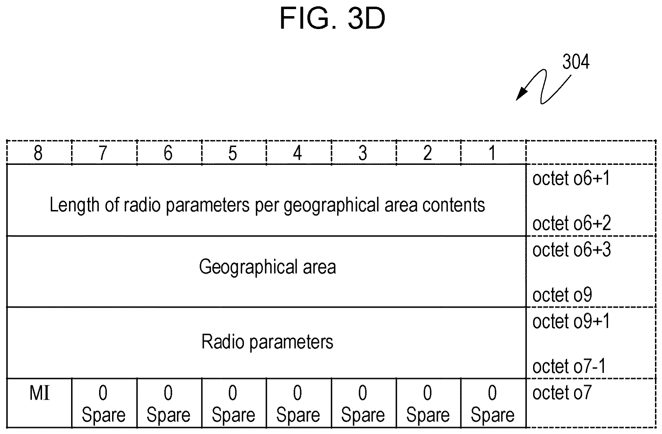

A message format 304 shown in Fig. 3D relates to a radio parameters per geographical area contents field. The fields related to the message format 304 are stored in the Radio parameters per geographical area info fields.

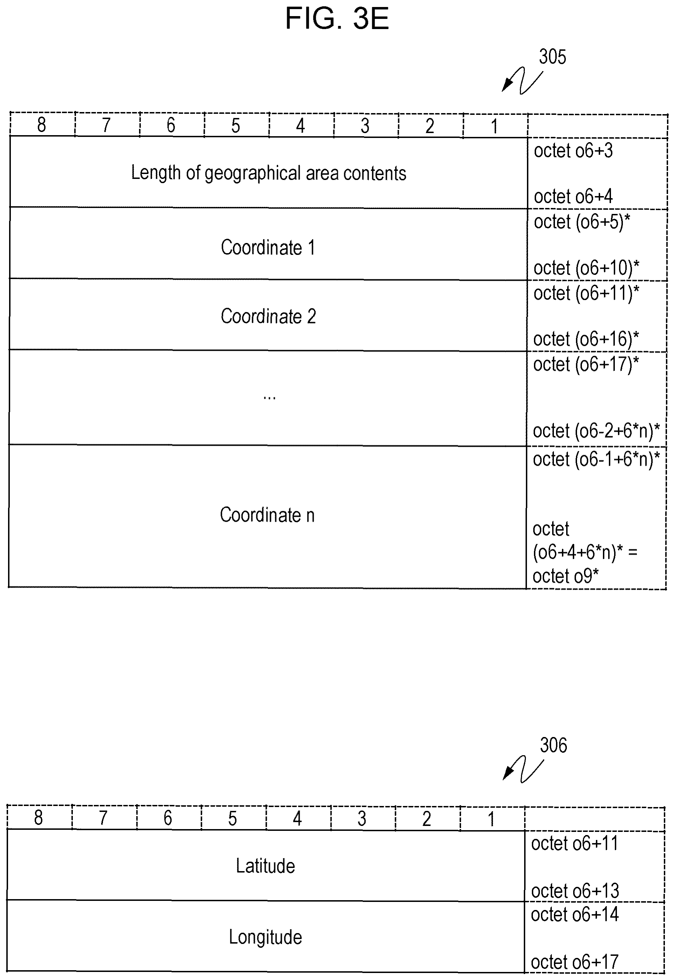

Message formats 305, 306 shown in Fig. 3E relate to messages stored in the radio parameters per geographical area contents field. The message format 305 relates to a geographical area contents field. The message format 306 relates to a Coordinate field.

The geographical area contents field related to the message format 305 is composed of multiple Coordinate fields.

The message format 306 related to a Coordinate field is composed of a Latitude field and a Longitude field. These fields store the corresponding latitude and longitude and uniquely indicate a coordinate point that indicates a communication area.

There are multiple coordinate points indicated by the message format 306 on the geographical area contents field indicated by the message format 305. As a result, the region formed by connecting these coordinate points can be uniquely identified as a communication area.

Here, the formats of the Latitude field and Longitude field shown in the message format 306 will be described.

Information on the latitude and information on the longitude, stored in the fields, are encoded and stored in 24 bits in accordance with the format specified in Section 6.1 of TS23.032.

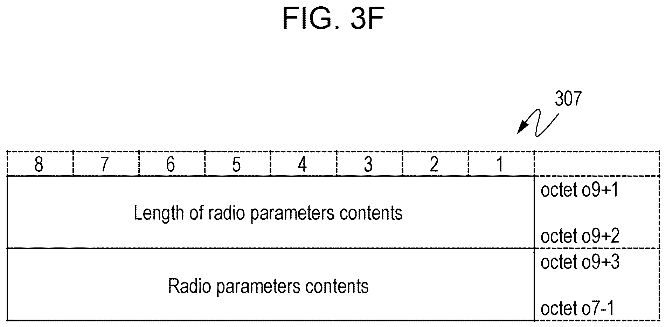

A message format 307 shown in Fig. 3F relates to a Radio parameters contents field. The Radio parameters contents field is stored in the radio parameters per geographical area contents field.

Different radio parameters are set in the Radio parameters contents field in this field according to whether the settings are intended for E-UTRA or NR.

If the settings are intended for E-UTRA, the SL-V2X-Preconfiguration parameters specified in Section 9 of TS36.331 are set in this field. If the settings are intended for NR, the SL-Preconfiguration NR parameters specified in Section 9.3 of TS38.331 are set in this field. In place of or in addition to SL-Preconfiguration NR, radio parameters for mobile IAB may be stored due to the future installation of parameters in the Radio parameters contents field.

The radio parameters that are set in the Radio parameters contents field may be as follows. The radio parameters may include the frequencies available in a corresponding specific area, radio channels available in the corresponding specific area, and a radio wave intensity available in the corresponding specific area. The radio parameters may also include available IP addresses in the corresponding specific area, and available service IDs in the corresponding specific area.

The message formats 301 to 307 shown in Figs. 3A to 3F relate to a V2XP Info Field message indicating a V2X communication policy in the 3GPP specifications. In the present embodiment, Geographical area information stored in the Radio parameters per geographical area info fields defined in the message format 303 is used. In other words, the Geographical area information is used as determination information to control whether to provide functions as a mobile IAB node within or outside a specific area.

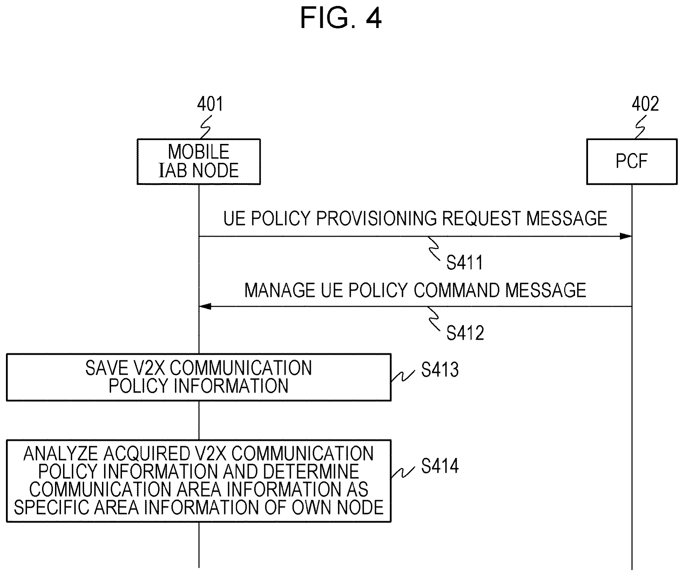

Next, a sequence to acquire V2X communication policy information and determine specific areas in the present embodiment will be described with reference to Fig. 4.

A mobile IAB node 401 composed of the hardware configuration 101 and the software functions 201 performs V2X communication policy provisioning procedure with a PCF to acquire V2X communication policy information. The V2X communication policy provisioning procedure is also called V2X policy provisioning procedure, and PCF is an abbreviation for Policy Control Function.

The mobile IAB node 401 transmits a request message to request a V2X communication policy. Specifically, the mobile IAB node 401 transmits a UE POLICY PROVISIONING REQUEST message to the PCF 402 in S411. The UE POLICY PROVISIONING REQUEST message contains a request to designate a communication policy set for the mobile IAB 401.

When the PCF 402 receives the message, the PCF 402 responds with a MANAGE UE POLICY COMMAND message in S412.

The response contains V2X communication policy information, and the requesting mobile IAB node 401 can acquire V2X communication policy information through this procedure. This procedure is defined in TS24.587 and TS24.501 of the 3GPP specifications. In this case, when the V2X communication policy has expired or when there are no valid settings currently on the mobile IAB node, that is, when it is determined that reacquisition of a V2X communication policy is needed due to anomaly detection, reacquisition of a V2X communication policy is performed.

After the mobile IAB node 401 acquires the V2X communication policy information in accordance with the procedure of the 3GPP specifications, the mobile IAB node 401 saves the V2X communication policy information acquired in S413.

Finally, the mobile IAB node 401 analyzes the Radio parameters per geographical area info fields defined in 303 based on the V2X communication policy information acquired in S414. Then, the mobile IAB node 401 determines the communication area information stored in each piece of Geographical area information as specific area information for the mobile IAB node 401.

At this time, the mobile IAB node 401 performs the conversion processing of the Latitude field and Longitude field of the message format 306 together. As described above, the Latitude field and Longitude field indicate each of the multiple coordinate points present in the geographical area contents fields shown in the message format 305.

The Latitude field and Longitude field respectively store latitude and longitude information encoded in 24 bits. The mobile IAB node 401 performs decoding in accordance with the format shown in Section 6.1 of STS23.032 and determine the latitude and longitude of each coordinate point in advance. The mobile IAB node 401 may hold the decoded latitude and longitude information in the mobile IAB node separately.

In this way, in the present embodiment, acquisition of V2X communication policy information defined in the 3GPP specifications is performed in the mobile IAB node 401. Then, the mobile IAB node 401 specifies specific areas based on the communication area information stored in the V2X communication policy information.

Next, a control method in a case where the mobile IAB node 401 moves between the defined specific areas will be described.

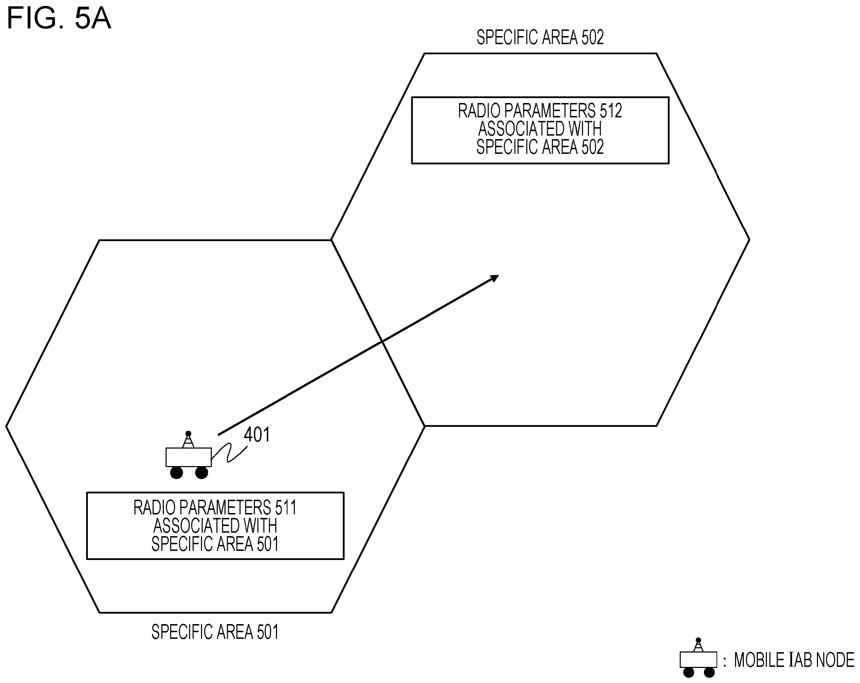

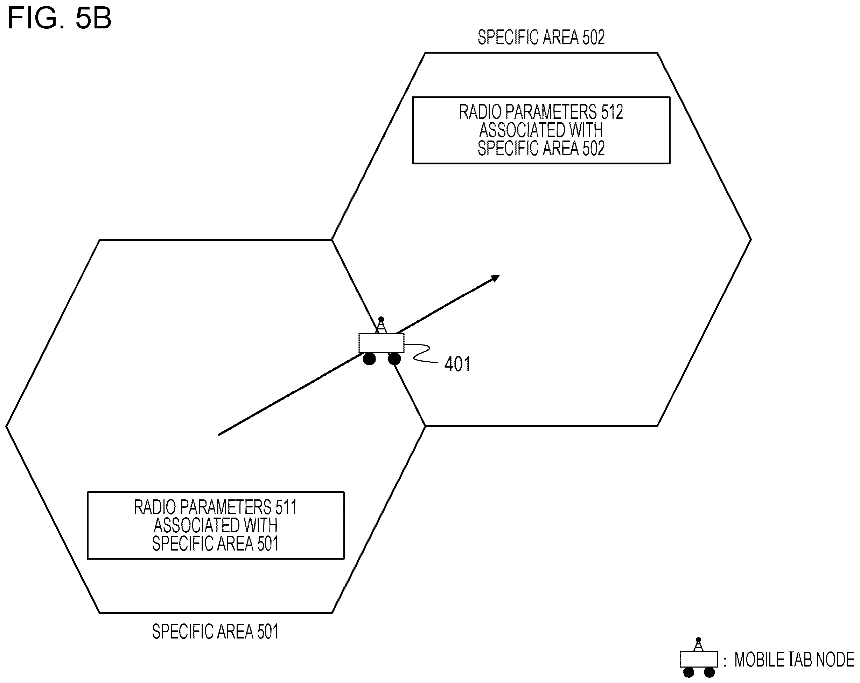

Figs. 5A and 5B are illustration diagrams showing examples of a situation in which a mobile IAB node is moving while providing service using radio parameters associated with a specific area.

In the situations shown in Figs. 5A and 5B, the mobile IAB node 401 is currently moving in a specific area 501 and is operating with radio parameters 511 associated with this area.

The radio parameters associated with this area are associated with a corresponding piece of Geographical area information contained in the V2X communication policy information defined in the 3GPP specifications. In this case, the radio parameters are stored in the radio parameters per geographical area contents field shown in the message format 307. The radio parameters may be the SL-V2X-Preconfiguration parameters or the SL-Preconfiguration NR parameters. Alternatively, the radio parameter may be radio parameters for a mobile IAB.

The mobile IAB node 401 then continues to move in the direction of the arrow and at a certain timing moves between areas from the specific area 501 to a specific area 502.

Here, the mobile IAB node 401 that has moved between areas may presumably have a mechanism to interrupt the provision of service as specified in TR 22.839 of the 3GPP specifications. In the case of the above mechanism, the mobile IAB node 401 that has moved between areas switches to operation with radio parameters 512 associated with the area to which the mobile IAB node 401 has moved and resumes the provision of service.

However, there are cases where the radio parameters 511 associated with the specific area 501 before movement are included in the radio parameters 512 associated with the destination specific area 502. For example, it is assumed that among the radio parameters, the value of a parameter α falls within the range a1 ≤ α ≤ b1 for the radio parameters 511, and falls within the range a2 ≤ α ≤ b2 for the radio parameters 512. In this case, if a2 ≤ a1 and b2 ≥ b1, the radio parameter 511 is included in the radio parameter 512 for the parameter α. In this case, the mobile IAB node 401 can continue operation even in the specific area 502 while the settings of the radio parameters 511 remain unchanged. Therefore, in the present embodiment, in such cases, the mobile IAB node 401 continues to provide service as it is without interrupting the provision of service.

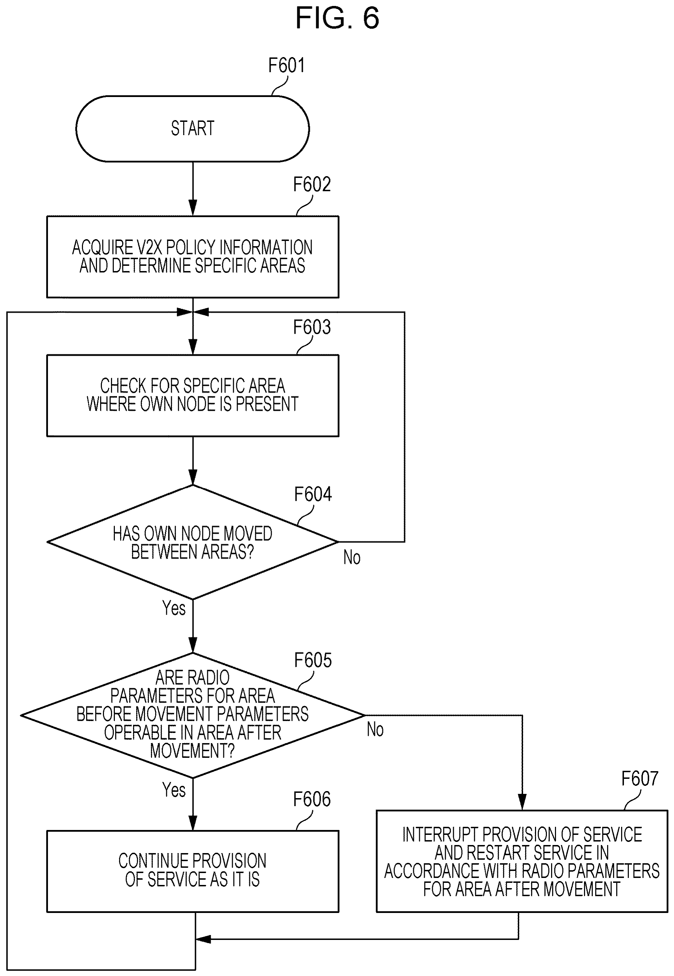

Fig. 6 is a schematic flowchart of an example of a process that is executed in a mobile IAB node (mobile IAB node 401) according to the present embodiment. In this flowchart, a service provision function is controlled based on radio parameters associated with the specific area information in a mobile IAB node.

First, the mobile IAB node 401 that has started operation in F601 performs the process of acquiring V2X policy information according to the 3GPP specifications and determining specific areas in F602.

The specific process contents in F602 are realized by the flowchart shown in Fig. 4. The process of F602 may be executed only for the first time and, after that, may be executed only when a predetermined condition is satisfied. In this case, the predetermined condition may be satisfied based on a lapse of time or the like or may be satisfied in accordance with an update of the V2X policy information or the like.

In F602, the specific areas related to the process of determining specific areas may include not only the specific area to which the current position of the mobile IAB node 401 belongs but also surrounding specific areas different from that specific area. For example, when the moving path is determined in advance, one or more specific areas along the moving path become targets to be determined.

Subsequently, in F603, the mobile IAB node 401 performs the process of determining a specific area for the own node. In other words, the mobile IAB node 401 specifies the specific area to which the current position of the local station belongs. The mobile IAB node 401 monitors which specific area the current position of the mobile IAB node 401 is in among the multiple specific areas determined in S414 while moving. Here, the current position of the mobile IAB node 401 is determined based on the longitude and latitude information acquired by the GPS communication unit 106.

Subsequently, the mobile IAB node 401 performs a determination in F604 whether the own node has moved between areas.

This determination process determines that the own node has moved between areas when the currently positioned specific area determined in F603 is different from the previous specific area.

This determination process is performed at regular intervals along with F603, and, when it is determined that the mobile IAB node 401 has not moved between areas, a check process of F603 is performed again after a certain period of time, and the determination process of F604 for movement between areas is continued.

When the mobile IAB node 401 determines in F604 that the mobile IAB node 401 has moved between areas, the mobile IAB node 401 then performs a determination process in F605. Specifically, the mobile IAB node 401 determines whether the values of the radio parameters associated with the specific area where the own node has been present before the movement are also operable in the specific area where the own node is present after the movement.

An example of the determination process includes a determination process as to whether the values of the radio parameters 511 associated with the specific area 501 before the movement are included in the values of the radio parameters 512 associated with the specific area 502 after the movement.

For example, it is assumed that the radio parameters 511 and the radio parameters 512 both include common multiple parameters (here, five parameters A1 to A5). In this case, for each of the parameters A1 to A5, it may be determined whether the value of the radio parameter 511 is included in the value of the radio parameter 512. In other words, it is determined whether the value of the parameter A1 among the radio parameters 511 is included in the value of the parameter A1 among the radio parameters 512. Also, it is determined whether the value of the parameter A2 among the radio parameters 511 is included in the value of the parameter A2 among the radio parameters 512. The same applies to the other parameters A3 to A5. Then, when the value of the radio parameter 511 is included in the value of the radio parameter 512 for each of the five parameters A1 to A5, the determination may be affirmative. In other words, it may be determined that the values of the radio parameters associated with the specific area where the own node has been present before the movement are also available in the specific area where the own node is present after the movement.

In a case where, for example, the parameter A1 is an available radio channel, the values of the radio parameters 511 are channels β1 and β2 and the value of the radio parameter 512 is β1, so it is as described above. In this case, the values of the radio parameters 511 are not included in the value of the radio parameter 512. However, in a modification, because the channel β1 is common, it may be determined that the value of the parameter is also available in the specific area where the own node is present after the movement. In this case, for example, higher-level software may prohibit the use of the channel β2 (use in a specific area where the own node is present after the movement).

In this determination process, when the determination is affirmative, the mobile IAB node 401 continues to provide the currently running service as is in the specific area after the movement in F606. In other words, the mobile IAB node 401 prohibits interruption of the provision of service due to movement between areas. Then, after a certain period of time has elapsed, the process is resumed from F603 on the assumption that the new specific area 502 is the specific area where the own node has been present.

In this determination process, when the determination is negative, the mobile IAB node 401 interrupts the provision of service in F607. In this case, the mobile IAB node 401 restarts services in accordance with the values of the radio parameters associated with the specific area after the movement, and resumes the provision of services in the specific area after the movement.

In this way, according to the present embodiment, the mobile IAB node determines whether to interrupt the provision of service when the mobile IAB node moves outside the specific area. At this time, based on the information that indicates the correspondence between the specific area and the radio parameters, it is possible to determine whether the values of the radio parameters associated with the specific area are also available outside the specific area. As a result, compared to when the provision of service is uniformly interrupted, it is possible to reduce the frequency of interruption of the provision of service and efficiently provide service.

Incidentally, in such a mechanism that uses the correspondence between a specific area and the values of radio parameters, it is useful to determine, on the 5G system, how the mobile IAB node defines specific areas. In this regard, in the present embodiment, as described above, specific areas can be defined by using a message that contains a V2XP Info Field indicating a V2X communication policy in 5G NR.

### [Second Embodiment]

In the first embodiment, the control method in a case where the mobile IAB node moves between two contiguous specific areas has been described. Here, another embodiment that is a control method in a case where a mobile IAB node moves between two non-contiguous specific areas will be described.

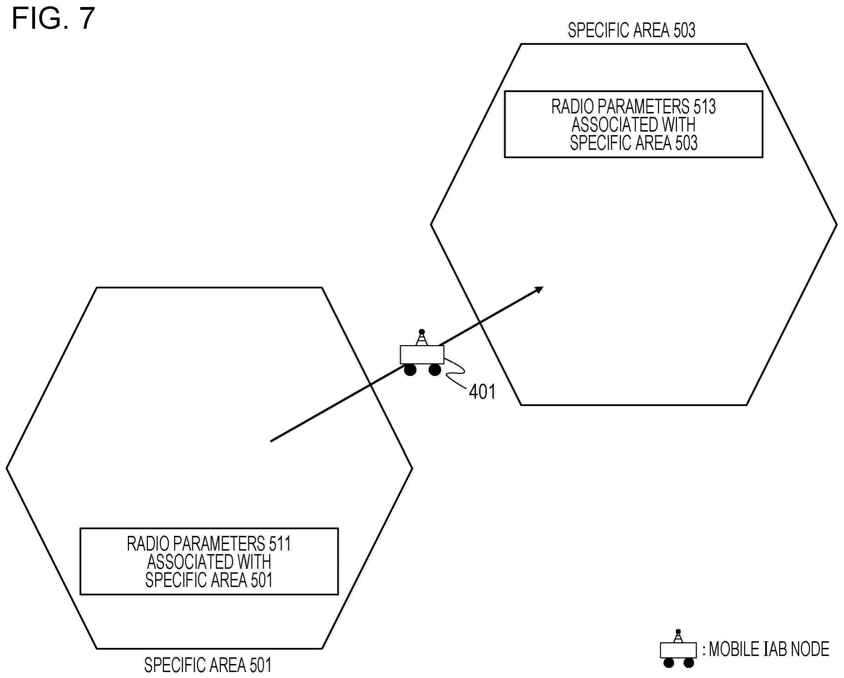

Fig. 7 is an illustration diagram of the second embodiment and is a schematic diagram showing a case where two neighboring specific areas are separated by definition.

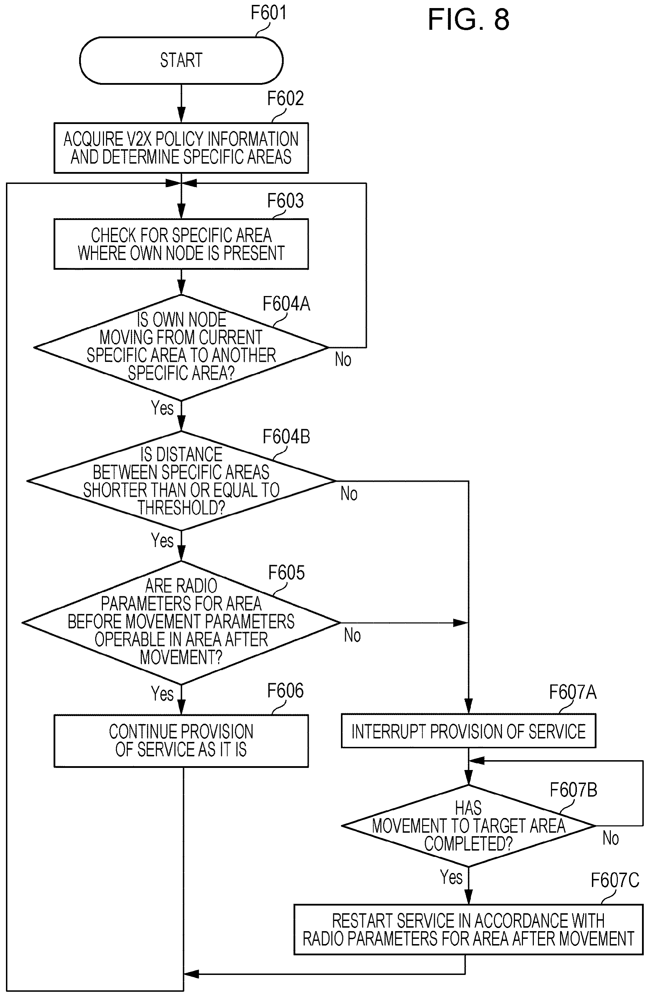

For example, in a case of a method of defining specific areas according to the first embodiment, two neighboring specific areas can be non-contiguous by definition as schematically shown in Fig. 7. For example, in the example shown in Fig. 7, two neighboring specific areas 501, 503 are separated by definition. In this case, as will be described with reference to Fig. 8 below, a control method according to, for example, the distance between two neighboring specific areas may be implemented.

Fig. 8 is a schematic flowchart of an example of a process that is executed in a mobile IAB node (mobile IAB node 401) according to the present embodiment.

The process shown in Fig. 8 differs from the process shown in Fig. 6 described above in relation to the first embodiment in that F604 is replaced with F604A and F604B. The process shown in Fig. 8 differs from the process shown in Fig. 6 described above in relation to the first embodiment in that F607 is replaced with F607A to F607C.

In F604A, the mobile IAB node 401 determines whether the own node is moving from the specific area where the own node has been positioned in the previous cycle to another specific area (hereinafter, referred to as "target specific area"). In other words, the mobile IAB node 401 determines whether the current position does not belong to any specific area but the mobile IAB node 401 can move to another specific area. When a planned movement path of the mobile IAB node 401 is set in advance, the target specific area may be specified based on the planned movement path. In the example shown in Fig. 7, the state where the mobile IAB node 401 is moving from the specific area 501 to a specific area 503 is schematically shown. When the determination result is affirmative in F604A, the process proceeds to F604B; otherwise, the process returns to S603.

In F604B, the mobile IAB node 401 determines whether the distance from the recently positioned specific area to the target specific area (the distance between the specific areas) is shorter than or equal to a threshold. The threshold may be freely set and may be a relatively small value (for example, a distance that can be moved within one minute). The threshold may be changed according to the moving speed of the mobile IAB node 401. For example, the threshold may be changed so as to reduce as the moving speed of the mobile IAB node 401 increases. When the determination result is affirmative in F604B, the process proceeds to F605; otherwise, the process proceeds to F607A.

In F607A, the mobile IAB node 401 interrupts the provision of service. Then, the mobile IAB node 401 enters a standby state for the completion of movement to the target specific area (F607B). When the movement to the target specific area is complete ("YES" in F607B), the process proceeds to S607C.

In F607C, the mobile IAB node 401 restarts service in accordance with the values of the radio parameters associated with the specific area after the movement, and resumes the provision of service in the specific area after the movement.

With the thus configured second embodiment as well, similar advantageous effects to those of the above-described first embodiment are obtained. In particular, according to the present embodiment, when the mobile IAB node 401 moves between two specific areas, control according to the distance between two specific areas can be implemented even when the two specific areas are separated by definition.

In the above-described example, the determination of F604B is performed based on the distance between the specific areas (an example of a predetermined parameter); however, the configuration is not limited thereto. Any parameters that correlate with the distance or duration (time used for movement) from the recently positioned specific area to the target specific area may be evaluated. In this case, the value of a parameter used for determination may be calculated based on at least one of the planned movement path of the own node (mobile IAB node 401), the moving speed of the own node, and the positional relationship between the current position of the own node and the target specific area. In addition to or in place of this, the value of a parameter used for determination may be calculated based on an elapsed time after the own node exits a recently positioned specific area (the specific area 501 in Fig. 7).

### [Third Embodiment]

In the first embodiment, a method of defining specific areas in a mobile IAB node and a control method in a case where the mobile IAB node moves between areas have been described. Here, another embodiment of the method of defining specific areas in a mobile IAB node will be described.

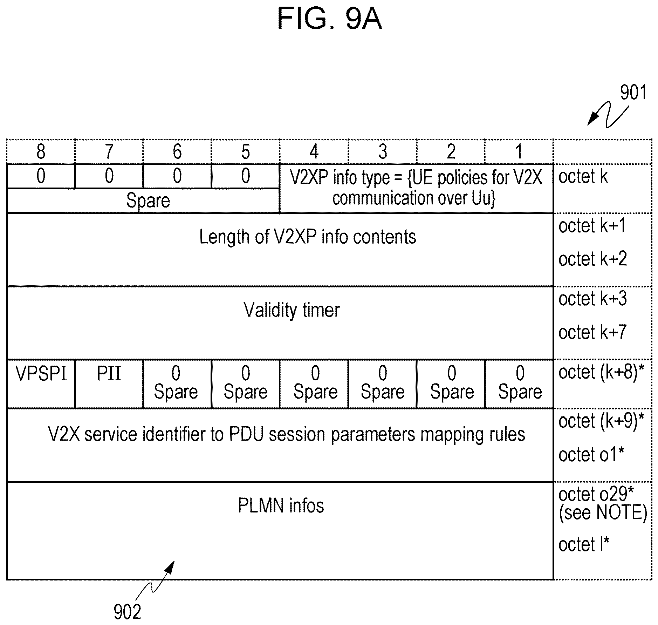

Figs. 9A to 9D show another message format 901 different from the first embodiment related to the V2XP Info Field message indicating the V2X communication policy in the 3GPP specifications.

The message format 901 shown in Fig. 9A is defined in TS24.588 and is intended to notify the IAB node of the V2X communication policy in 5G New Radio (NR) defined by 3GPP.

The V2XP info type field of the message format 901 stores information indicating that it is a policy provided for mobile IAB. In the present embodiment, information indicating UE policies for V2X communication over Uu is stored in the V2XP info type field.

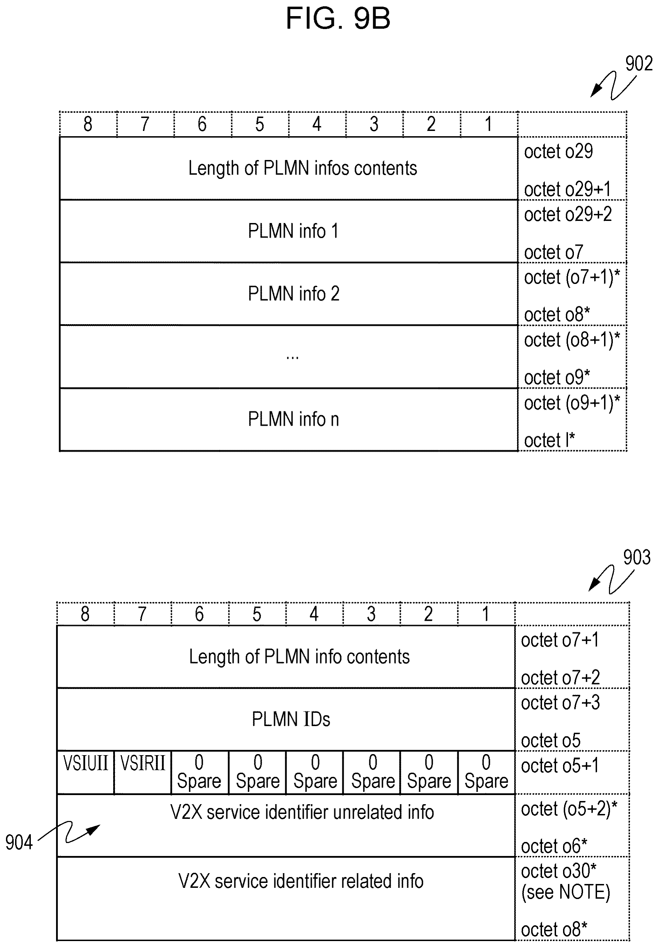

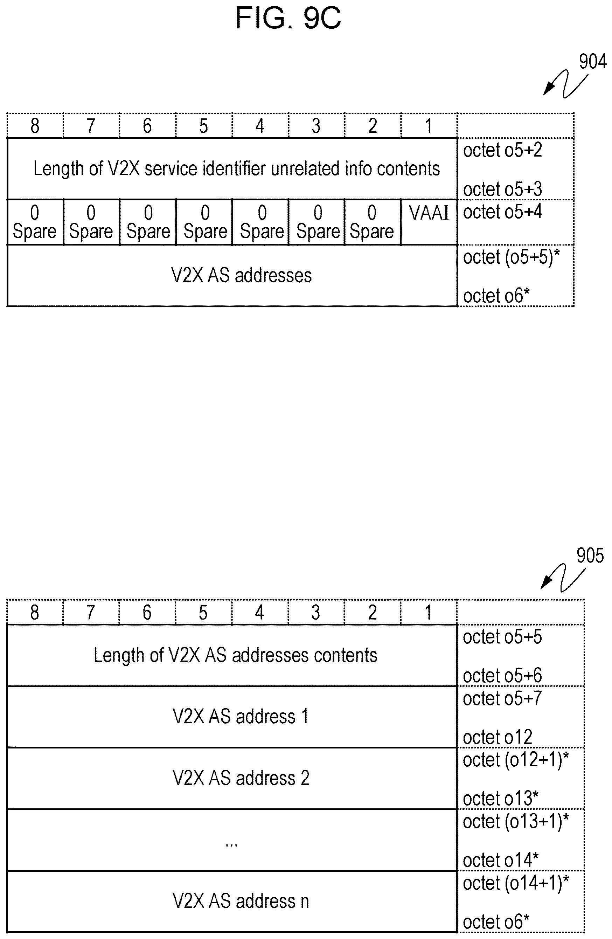

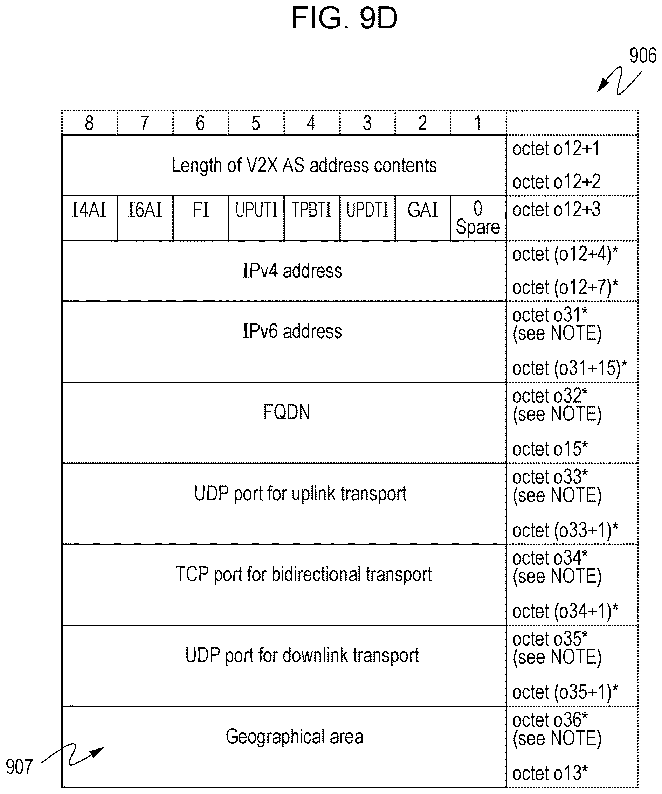

The fields of the message format 901 store nested information such as parameter update cycle information, service identifiers, radio parameters, and communication area information, which compose the V2X communication policy information. In the present embodiment, communication area information is stored in the message format 901. The description will be more specifically made. A PLMN infos field 902 shown in Fig. 9A is more specifically shown in fields 902 of Fig. 9B. The PLMN info 1 to n fields shown in 902 of Fig. 9B are more specifically shown in fields 903. The fields 903 include additional information such as service identifiers and information regarding V2X. The additional information will be described. A V2X Service identifier unrelated info in the fields 903 is more specifically shown in fields 904 of Fig. 9C. A V2X AS addresses shown in the fields 904 of Fig. 9C is more specifically shown in fields 905. The fields 905 include V2X AS address 1 to n fields, and each field is more specifically shown in fields 906 of Fig. 9D. The fields 906 include a Geographical area field 907. This field can store the latitude and longitude information of the formats shown in 305, 306 of Fig. 3E. In the present embodiment, the mobile IAB node 401 just needs to be configured to determine specific areas by decoding the Geographical area field 907.

With the thus configured third embodiment as well, similar advantageous effects to those of the above-described first embodiment are obtained.

The embodiments have been described in detail above; however, not limited to those specific embodiments. Various modifications and changes are possible within the scope of the appended claims. It is also possible to combine all or some of the components of the above-described embodiments.

The present invention is not limited to the above-described embodiments. Various changes and modifications are applicable without departing from the spirit and scope of the present invention. Therefore, the following claims are attached to show the scope of the present invention.

This application claims the benefit of Japanese Patent Application No. 2023-078137 filed May 10, 2023, which is hereby incorporated by reference herein in its entirety. Reference Signs List

101 hardware configuration
102 control unit (an example of acquisition means, determination means, detection or prediction means, position acquisition means, calculation means, and control means)
103 storage unit
104 wireless communication unit (an example of acquisition means)
105 communication antenna control unit
106 GPS communication unit
107 GPS antenna control unit
108 sensor unit
201 software functions
202 signal transmission unit
203 signal receiving unit
204 data storage unit
205 connection control unit
206 notification information detection unit
207 5G communication control unit
208 notification information generating unit
209 GPS signal transmission unit
210 GPS signal receiving unit
211 GPS control unit
212 sensor control unit
401 mobile IAB node
501 specific area (an example of a first specific area)
502 specific area (an example of a second specific area)
503 specific area (an example of a second specific area)
511 radio parameters (an example of a first radio parameter)
512 radio parameters (an example of a second radio parameter)

## Claims

1. A communication apparatus comprising:
acquisition means configured to acquire a message containing a V2XP Info Field indicating a V2X communication policy, the message containing first information indicating a correspondence between a communication area and a value of a radio parameter; and
control means configured to provide a function as a mobile IAB node based on the first information.

2. The communication apparatus according to claim 1, wherein the first information is contained in a Not served by E-UTRA and not served by NR field in the V2XP Info Field.

3. The communication apparatus according to claim 2, wherein the first information is contained in an E-UTRA radio parameters per geographical area list field in the Not served by E-UTRA and not served by NR field, or an NR radio parameters per geographical area list field in the Not served by E-UTRA and not served by NR field.

4. The communication apparatus according to any one of claims 1 to 3, wherein the acquisition means is configured to acquire the message as a response to a request message that requests a V2X communication policy from a PCF.

5. The communication apparatus according to claim 4, wherein
the request message contains a request that designates a communication policy set for mobile IAB, and
a V2XP info type field in the acquired V2XP Info Field contains second information indicating that the communication policy set for mobile IAB has been designated.

6. The communication apparatus according to claim 5, wherein the second information is information indicating UE policies for V2X communication over PC5.

7. The communication apparatus according to any one of claims 1 to 6, further comprising
position acquisition means configured to acquire current position information of an own node, wherein
the control means is configured to identify one of the communication areas where the own node is currently positioned based on the current position information, and provide the function based on the value of the radio parameter associated with the identified one of the communication areas.

8. The communication apparatus according to claim 7, further comprising
detection or prediction means configured to detect or predict area-to-area movement that the own node moves from a first specific area that is one of the communication areas where the own node is currently positioned to a second specific area that is one of the communication areas, different from the first specific area, wherein
the control means is configured to, when the area-to-area movement is detected or predicted by the detection or prediction means, determine whether the function provided in the first specific area can be continuously provided in the second specific area.

9. The communication apparatus according to claim 8, wherein the control means is configured to, when a first value of the radio parameter, associated with the first specific area, is operable in the second specific area, determine that the function can be continuously provided in the second specific area.

10. The communication apparatus according to claim 9, wherein the control means is configured to, when a first value of the radio parameter, associated with the first specific area, is included in a second value of the radio parameter, associated with the second specific area, determine that the first value of the radio parameter is also operable in the second specific area.

11. The communication apparatus according to any one of claims 8 to 10, wherein the radio parameter include at least one of an available frequency, an available radio channel, an available radio wave intensity, an available IP address, and an available service ID.

12. The communication apparatus according to any one of claims 8 to 11, wherein the radio parameter includes at least one of SL-V2X-Preconfiguration parameters and SL-Preconfiguration NR parameters.

13. The communication apparatus according to any one of claims 8 to 12, further comprising
determination means configured to determine whether the first specific area and the second specific area are adjacent to each other, wherein
the control means is configured to, when the first specific area and the second specific area are adjacent to each other based on a determination result of the determination means, determine that the function can be continuously provided in the second specific area.

14. The communication apparatus according to any one of claims 8 to 13, further comprising
calculation means configured to calculate a value of a predetermined parameter indicating a travel time or travel distance related to movement from the first specific area to the second specific area, wherein
the control means is configured to, when the value of the predetermined parameter exceeds a threshold, determine that the function cannot be continuously provided in the second specific area.

15. The communication apparatus according to claim 14, wherein the calculation means is configured to derive the value of the predetermined parameter based on at least one of a planned movement path of an own node, a moving speed of the own node, a positional relationship between a current position of the own node and the second specific area, and an elapsed time after the own node has left the first specific area.

16. A control method of controlling communication, the control method comprising:
acquiring a message containing a V2XP Info Field indicating a V2X communication policy, the message containing first information indicating a correspondence between a communication area and a value of a radio parameter; and
providing a function as a mobile IAB node based on the first information.

17. A program for causing a computer to execute the following steps comprising:
acquiring a message containing a V2XP Info Field indicating a V2X communication policy, the message containing first information indicating a correspondence between a communication area and a value of a radio parameter; and
providing a function as a mobile IAB node based on the first information.
